# EUROPÄISCHE PATENTANMELDUNG

(11) **EP 1 178 455 A2**
(43) Veröffentlichungstag der Anmeldung: **06.02.2002**
(21) Anmeldenummer: 01112424.5
(22) Anmeldetag: 22.05.2001
(51) Int. Cl.: G08C 17/02

(54) **Verfahren und System zur Übertragung von Daten**

(30) Priorität: 04.08.2000 DE 10038096
(71) Anmelder: ROBERT BOSCH GMBH, 70442 Stuttgart (DE)
(72) Erfinder: Wrede, Juergen, 74321 Bietigheim-Bissingen (DE)

(57) **Zusammenfassung**

Verfahren zur Übertragung von Daten, insbesondere von Programmen oder Software, zwischen einem anbieterseitigen Datenverarbeitungsgerät, insbesondere einem Server, und wenigstens einem benutzerseitigen Datenverarbeitungsgerät, insbesondere einem programmierbaren Steuergerät in einem Kraftfahrzeug, wobei das anbieterseitige Datenverarbeitungsgerät und das benutzerseitige Datenverarbeitungsgerät jeweils mit einer Sende/Empfangseinrichtung zum drahtlosen Senden bzw. Empfangen der Daten in Wirkverbindung stehen,
**dadurch gekennzeichnet,**
daß die Daten nach Übertragung von einer der Sende-/Empfangseinrichtungen auf die jeweils andere Sende/Empfangseinrichtung zunächst auf einen Zwischenspeicher gegeben werden und erst bei Vorliegen eines vordefinierten benutzerseitigen oder anbieterseitigen Betriebszustandes in das jeweilige Datenverarbeitungsgerät eingelesen bzw. geladen werden.

## Beschreibung

Die vorliegende Erfindung betrifft ein Verfahren und ein System zur Übertragung von Daten, insbesondere zum Laden oder Aktualisieren von Programmen, zwischen einem anbieterseitigen Datenverarbeitungsgerät, insbesondere einem Server, und einem benutzerseitigen Datenverarbeitungsgerät, insbesondere einem programmierbaren Steuergerät in einem Kraftfahrzeug, gemäß dem Oberbegriff der Patentansprüche 1 bzw. 9.

Heutige Kraftfahrzeuge weisen in der Regel eine Vielzahl von elektronischen Systemen auf, welche über Software-Programme oder Datensätze gesteuert werden. Bei derartigen elektronischen Systemen ist es in bestimmten Fällen notwendig oder wünschenswert, die Software-Programme oder Datensätze der im Feld bzw. Einsatz, d. h. beim Kunden oder einer Serviceorganisation, befindlichen elektronischen Steuergeräte nachträglich zu ändern oder vollständig auszutauschen. Ein Beispiel dafür ist ein nachträglich festgestellter Fehler in der Software eines elektronischen Systems.

Herkömmlicherweise ergeben sich in diesem Fall Schwierigkeiten, da beispielsweise sämtliche im Feld befindlichen Steuergeräte erreicht werden müssen. Diese Maßgabe ist insbesondere im Falle von sicherheitsrelevanten Fehlern bedeutsam. Es ist ferner erstrebenswert, eine notwendige Datenübertragung bzw. einen Datenaustausch möglichst schnell vorzunehmen. Ferner entstehen beispielsweise im Falle einer notwendigen Rückrufaktion zur Durchführung eines derartigen Datenaustauschs nicht nur enorme Kosten, derartige Rückrufaktionen können auch zu Kundenärger und Prestigeverlust führen.

Es ist bekannt, daß über eine Serviceorganisation der Hersteller oder Zulieferer eine neue Software beispielsweise per CD-ROM oder Internet an die Servicestationen/Werkstätten verteilt wird. Sobald die zurückgerufenen oder zum normalen Serviceintervall kommenden Fahrzeuge/Geräte in der Servicewerkstatt sind, kann dann über vorhandene PC-Diagnoseprogramme die neue Software in das Steuergerät geladen bzw. "geflasht" werden. Anschließend wird das betreffende Steuergerät beispielsweise mit einem Aufkleber gekennzeichnet, welcher die neu geladene Software-Variante identifiziert und dokumentiert.

Es ist aus dem Stand der Technik ebenfalls bekannt, daß über Funk Daten oder Zustände von Programmen in geographisch weit auseinanderliegenden Geräten verändert werden können, beispielsweise im Falle von Funkuhren eine Umstellung von Winter- auf Sommerzeit. Ebenso ist die Fernwartung von Maschinen und Anlagen über drahtlose bzw. mobile Telefonverbindungen bekannt.

Ferner sind aus dem Stand der Technik Kraftfahrzeuge bekannt, welche mit Autoradios oder Mobiltelefonen, d. h. Funkempfängern, ausgerüstet sind. Derartige Funkempfänger sind zunehmend über Datenbusse mit dem elektronischen Steuergerät beispielsweise für den Antrieb oder zur Steuerung eines ABS-Systems verknüpft. Somit ist bereits bei herkömmlichen Kraftfahrzeugen ein einfacher Datenaustausch zwischen den Funkempfängern und einem Steuergerät zur Verfügung gestellt.

Aus der DE 197 50 364 A1 ist ein Verfahren zur Aktualisierung von in einem für mobilen Einsatz vorgesehenen Kommunikationsendgerät gespeicherten Informationen bekannt. In dieser Druckschrift wird angegeben, daß die Aktualisierung der gespeicherten Informationen über Funk unter Verwendung einer Sende- und Empfangsantenne möglich ist.

Ferner ist aus der DE 197 50 372 A1 ein Verfahren zum Laden von Programmen und/oder Daten in ein datenverarbeitendes Gerät in einem Kraftfahrzeug bekannt. Hierbei erfolgt das Laden von Programmen und/oder Daten aus einem Server eines Anbieters in das datenverarbeitende Gerät eines Benutzers dadurch, daß der Server des Anbieters und das datenverarbeitende Gerät jeweils mit einem Sende-Empfangsgerät verbunden werden, und daß auf Anforderung des Benutzers eine Funkverbindung zwischen Benutzer und Anbieter hergestellt wird, über die vom Benutzer Identifikationsdaten zur Prüfung einer Zugriffsberechtigung übermittelt und anschließend vom Benutzer angeforderte Programme und/oder Daten in das Gerät des Benutzers geladen werden.

Als problematisch bei einer derartigen Datenübertragung erweist sich, daß ein von der Umprogrammierung betroffenes Steuergerät während der Datenübertragung in einem genau definierten Zustand, beispielsweise einem Stand-By-Zustand, gehalten werden muß, welcher während des Übertragungsvorgangs nicht geändert werden darf. Während dieser Übertragungszeiten ist das betroffene Steuergerät nicht uneingeschränkt einsatzfähig, was beispielsweise zu Sicherheitsrisiken führen kann.

Aufgabe der Erfindung ist es, eine möglichst einfache Umprogrammierung von im Rahmen eines Kraftfahrzeugs vorgesehenen Steuergeräten zu ermöglichen, wobei Funktionsbeeinträchtigungen des Steuergeräts bzw. des Kraftfahrzeugs während der Umprogrammierung zu vermeiden sind.

Diese Aufgabe wird gelöst durch ein Verfahren mit den Merkmalen des Patentanspruchs 1 sowie ein System mit den Merkmalen des Patentanspruchs 9.

Erfindungsgemäß kann in einfacher Weise sichergestellt werden, daß eine über Funk bzw. drahtlos vorgenommene Umprogrammierung eines Steuergeräts nicht zu unerklärlichen oder lästigen Wartezeiten für den Fahrer/Bediener oder zu Funktionsbeeinträchtigungen des Steuergeräts bzw. Fahrzeugs führt. Die erfindungsgemäße Zwischenspeicherung der übertragenen Daten und ihre Überspielung auf die jeweiligen Datenverarbeitungsgeräte nur bei Vorliegen eines vordefinierbaren Betriebszustandes ermöglicht beispielsweise eine Programmierung von benutzerseitigen bzw. fahrzeugseitigen Steuergeräten, ohne daß bei der Programmierung Funktionsbeeinträchtigungen oder Wartezeiten entstehen. Es sei angemerkt, daß die Bezeichnung Sende/Empfangseinrichtung sämtliche diesbezüglichen, durch und/oder verknüpften anbieter- und benutzerseitigen Möglichkeiten umfassen soll, insbesondere eine anbieterseitige und benutzerseitige Sende- und Empfangseinrichtung, oder eine anbieterseitige Sendeeinrichtung und eine benutzerseitige Empfangseinrichtung.

Vorteilhafte Ausführungsformen der Erfindung sind Gegenstand der Unteransprüche.

Gemäß einer bevorzugten Ausführungsform des erfindungsgemäßen Verfahrens wird als vordefinierbarer benutzerseitiger Betriebszustand ein Betriebszustand des Kraftfahrzeugs gewählt. Durch diese Maßnahme ist das erfindungsgemäße Verfahren derart einsetzbar, daß Benutzungsbeeinträchtigungen des Kraftfahrzeuges ausgeschlossen werden können.

Zweckmäßigerweise wird als vordefinierter Betriebszustand der Zustand mit stehendem Fahrzeug und/oder eingestellter Feststellbremse und/oder ausgeschalteter Zündung und/oder abgezogenem Zündschlüssel gewählt. Hierdurch kann gewährleistet werden, daß eine Programmierung eines im Fahrzeug enthaltenen Steuergeräts nur dann erfolgt, wenn das Fahrzeug nicht in Betrieb ist.

Zweckmäßigerweise wird eine Stromversorgung des benutzerseitigen Datenverarbeitungsgeräts und/oder des Zwischenspeichers für eine voreinstellbare Zeit nach Ausschalten der Zündung bzw. Abziehen des Zündschlüssels aufrechterhalten. Diese Maßnahme ermöglicht, daß auch noch für eine gewisse Zeit nach Abziehen des Zündschlüssels eine Neuprogrammierung bzw. Umprogrammierung eines fahrzeugseitigen Steuergeräts durchgeführt werden kann.

Gemäß einer weiteren bevorzugten Ausführungsform des erfindungsgemäßen Verfahrens ist vorgesehen, daß der Zwischenspeicher mit einem zentralen Fahrzeugrechner in Wirkverbindung steht bzw. als Teil dieses zentralen Fahrzeugrechners ausgebildet ist.

Ein derartiger zentraler Fahrzeugrechner ist zweckmäßigerweise in der Lage, die übertragenen Daten zu prüfen, zu registrieren und zwischenzuspeichern. Der zentrale Fahrzeugrechner kann ferner in der Lage sein, die Umprogrammierung beispielsweise mit Identifikationscodes zu dokumentieren oder der Anbieterseite zu bestätigen. Der zentrale Fahrzeugrechner erkennt über verschiedene Sensorsignale, beispielsweise einen Drehzahlfühler oder Motordrehzahlmesser (direkt oder über einen Datenbus mit den weiteren Steuergeräten verbunden) den Zustand des Fahrzeugs.

Zweckmäßigerweise ist der zentrale Fahrzeugrechner über einen bidirektionalen Datenbus mit wenigstens einem der benutzerseitigen Datenverarbeitungsgeräte verbunden. Ein derartiger bidirektionaler Datenbus gewährleistet eine problemlose Datenübertragung zwischen zentralem Fahrzeugrechner und umzuprogrammierenden Datenverarbeitungsgeräten. Ferner ist es möglich, über einen derartigen Datenbus dem zentralen Fahrzeugrechner den Status der jeweiligen Datenverarbeitungsgeräte anzuzeigen.

Gemäß einer bevorzugten Ausgestaltung des erfindungsgemäßen Verfahrens umfassen die benutzerseitigen Datenverarbeitungsgeräte eine Motorsteuerung, ein ABS-System, ein EBS-System, ein Fahrdynamikregelungssystem, eine elektronische Luftfederung, eine Getriebesteuerung und eine Retardersteuerung.

Eine bevorzugte Ausführungsform der Erfindung wird nun anhand der beigefügten Zeichnung weiter erläutert. In dieser zeigt
- Figur 1: schematisch eine zentrale Sendestation als anbieterseitiges Gerät und ein Kraftfahrzeug, in dem eine Anzahl von Steuergeräten als benutzerseitige Datenverarbeitungsgeräte vorgesehen sind, und
- Figur 2: schematisch ein Flußdiagramm zur Darstellung einer bevorzugten Ausführungsform des erfindungsgemäßen Verfahrens.

Im dargestellten Ausführungsbeispiel wird als benutzerseitiges Datenverarbeitungsgerät ein peripheres Steuergerät verwendet. Die Darstellung gilt in analoger Weise auch für ein zentrales Steuergerät oder auch für einen zentralen Fahrzeugrechner. Das erfindungsgemäße Verfahren ist ferner im Zusammenhang mit einer Datenübertragung von einem Kraftfahrzeug auf eine zentrale anbieterseitige Einrichtung einsetzbar. Auch hier ist denkbar, daß die übertragenen Daten zunächst zwischengespeichert werden.

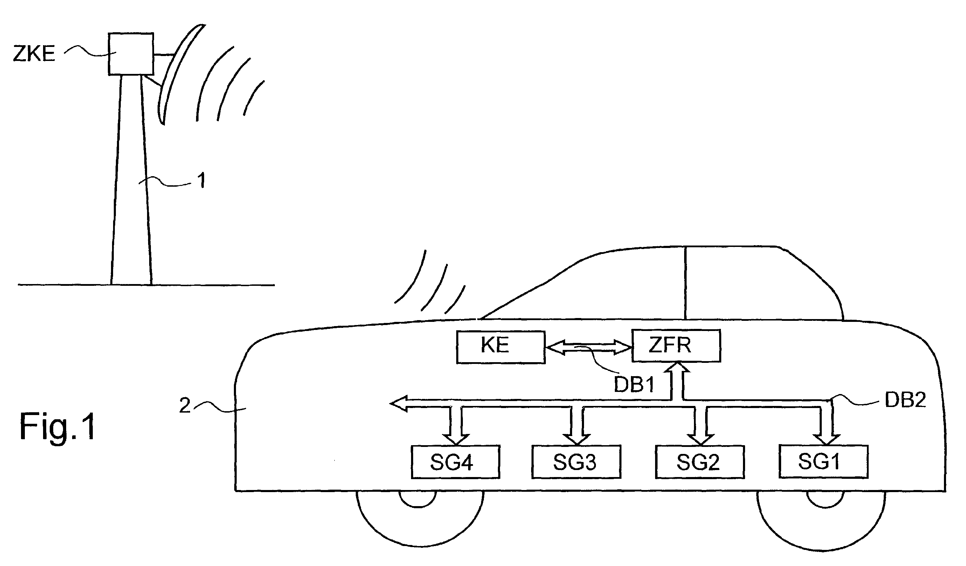

Soll beispielsweise eine verbesserte Software auf ein fahrzeugseitiges Steuergerät gegeben werden, erfolgt eine entsprechende Datenübertragung von einer autorisierten Sendestation des Herstellers, welche in der Figur 1 als zentrale Sendestation 1 ausgebildet ist. Die zentrale Sendestation ist hierbei mit einer Sende- und/oder Empfangseinrichtung ZKE ausgebildet. Das insgesamt mit 1 bezeichnete Kraftfahrzeug weist eine Kommunikationseinrichtung bzw. Sende- und/oder Empfangseinrichtung KE auf, welche die gesendeten Daten empfangen kann. Die Kommunikationseinrichtung KE kann beispielsweise in Form eines Autoradios (lediglich Empfang) oder eines Mobiltelefons (bidirektionell) oder eines speziellen Telekommunikationsgerätes mit einer Empfangs/Sendeeinheit, welches dauerhaft im Fahrzeug installiert ist, ausgebildet sein.

Über einen Datenbus DB1 leitet die Kommunikationseinrichtung KE die übertragenen Programmdaten an einen zentralen Fahrzeugrechner ZFR, in welchem die Daten geprüft, registriert und zwischengespeichert werden. Der zentrale Fahrzeugrechner ZFR ist über einen zweiten, bidirektionalen Datenbus DB2 mit den eigentlich zu programmierenden benutzerseitigen peripheren Steuergeräten bzw. Zielsteuergeräten SG1, SG2 usw. für den Daten- bzw.

Programmtausch verbunden. Als mögliche Steuergeräte sind beispielsweise die Motorsteuerung, ein ABS-System, ein EBS-System, ein Fahrdynamikregelungssystem, eine elektrische Luftfederung, eine Getriebesteuerung oder eine Retardersteuerung zu nennen.

Der zentrale Fahrzeugrechner ZFR erkennt über verschiedene Sensorsignale, beispielsweise einen Drehzahlfühler oder einem Motordrehzahlmesser (direkt oder über den Datenbus zu einem der anderen Steuergeräte) den Zustand des Fahrzeugs, beispielsweise ob sich das Fahrzeug im Stillstand oder in einem fahrenden Zustand befindet. Ferner ist feststellbar, ob beispielsweise der Motor läuft, eine Feststellbremse eingelegt ist oder der Zündschlüssel steckt. Über den Datenbus DB2 ist darüber hinaus dem zentralen Fahrzeugrechner der Status der einzelnen Steuergeräte SG1, SG2 bekannt. Voraussetzung dafür, daß der zentrale Fahrzeugrechner die Umprogrammierung eines der Steuergeräte SG1, SG2 usw. einleitet, ist ein gesicherter bzw. sicherer Zustand des Fahrzeugs und die Aufnahmebereitschaft eines jeweiligen Steuergeräts. Jedes Steuergerät sendet zu diesem Zwecke ein genau definiertes Statussignal über den Datenbus DB2 an den zentralen Fahrzeugrechner. Während der Umprogrammierung geht das betroffene Steuergerät in einen genau definierten Stand-By-Zustand über, welcher während des Programmiervorgangs nicht verändert werden kann. Zweckmäßigerweise erfolgt eine Programmierung so schnell wie möglich, beispielsweise innerhalb weniger Sekunden.

Damit für den Fahrer bzw. Bediener des Kraftfahrzeugs keine unerklärlichen Wartezeiten entstehen, wird zweckmäßigerweise ein Fahrzeugzustand ausgesucht, in welchem bei einer Programmierung keine Unannehmlichkeiten bzw. Nachteile für den Fahrer entstehen. Als besonders bevorzugt erweist sich, einen Zustand zu wählen, bei dem das Fahrzeug steht, die Feststellbremse eingelegt, die Zündung ausgeschaltet und der Zündschlüssel abgezogen ist. Ein Nachlauf bei der Stromversorgung des zentralen Fahrzeugrechners ZFR bzw. der Steuergeräte SG1, SG2 sorgt dafür, daß auch für eine bestimmte Zeit nach Entfernen des Zündschlüssels eine Umprogrammierung vorgenommen werden kann.

Zweckmäßigerweise wird als weitere Voraussetzung für die Umprogrammierung eines Steuergeräts gefordert, daß ein Identifikationscode für das neue Programm, welches an den zentralen Fahrzeugrechner gesendet wurde, mit einem Identifikationscode der ursprünglichen in einem Steuergerät SG abgelegten Software verglichen bzw. ausgetauscht wird. Erst wenn beide Identifikationscodes durch den zentralen Fahrzeugrechner und/oder das jeweilige Steuergerät geprüft und in genau definierter Weise als übereinstimmend festgestellt wurden, wird der Programmiervorgang freigegeben.

Zur Vermeidung von Mißbrauch und einer unsachgemäßen Umprogrammierung ist es ferner möglich, in der gesamten Kommunikationskette von der zentralen Sendestation 1 bis zum jeweiligen Steuergerät SG mehrere Paßwörter oder Verschlüsselungen einzubauen.

Um eine schnelle Erreichbarkeit sämtlicher im Felde befindlicher Fahrzeuge sicherzustellen, kann die Stromversorgung für die Kommunikationseinheit KE und den zentralen Fahrzeugrechner ZFR dauerhaft auch bei abgezogenem Zündschlüssel oder jeweils in bestimmten Zeitintervallen, welche zweckmäßigerweise mit entsprechenden Sendeintervallen der Sendestation 1 synchronisiert sind, eingeschaltet sein.

Nach abgeschlossener, erfolgreicher Umprogrammierung gibt das umprogrammierte Steuergerät SG1, SG2 usw. eine Quittierung an den zentralen Fahrzeugrechner, welcher eine entsprechende Quittierung an die Kommunikationseinheit KE weiterleitet. Die Kommunikationseinheit KE sendet ein Quittungssignal, eventuell kombiniert mit einem Fahrzeugidentifikationssignal, an die zentrale Sendestation 1, welches in einer zentralen Datenbank verarbeitet und gespeichert wird. Auf diese Weise hat ein Fahrzeughersteller jederzeit einen Überblick über den Stand einer Software-Tauschaktion.

Der zentrale Fahrzeugrechner hat ferner die Aufgabe, den Umprogrammiervorgang zu registrieren und zusammen mit den entsprechenden Identifikationscodes zu dokumentieren. Selbstverständlich ist es möglich, die zu tauschende Software bzw. die zu tauschenden Daten mit Checksummen- und anderen Prüfungen entsprechend dem Stand der Technik auf korrekte Übertragung zu prüfen, ähnlich wie dies bei herkömmlichen PC-Programmierungsvorgängen üblich ist.

In einer besonderen Ausgestaltung ist es möglich, den Fahrer bzw. Benutzer über ein Display darauf hinzuweisen, daß die Notwendigkeit eines Software-Tauschs in einem Steuergerät besteht und er umgehend den für eine entsprechende Datenübertragung erforderlichen Fahrzeugzustand herstellen möge. Bei sicherheitsrelevanten Änderungen kann z. B. sofort über ein rotes Warnsignal der Fahrzeugstillstand verlangt werden.

In einer abgewandelten und einfacheren Variante ist es möglich, von der zentralen Sendestation 1 an die Kommunikationseinheit KE in einem Fahrzeug zu senden, daß ein Fehler in der Software eines Steuergerätes vorliegt, wobei jedoch eine neue bzw. korrigierte Software nicht übertragen wird. Diese Information kann beispielsweise mittels des zentralen Fahrzeugrechners über ein Display dem Fahrer angezeigt werden oder eine Warnung ausgegeben werden, mit welcher der Fahrer aufgefordert wird, unmittelbar eine Werkstatt aufzusuchen.

Mittels der erfindungsgemäßen Maßnahme der Zwischenspeicherung von übertragenen Programmdaten in einem zentralen Fahrzeugrechner (oder auch in einem jeweiligen Zielsteuergerät oder einem anderen geeigneten Speicher) ist es möglich, den Datenempfang (dauerhaft möglich) vom Umprogrammiervorgang (welcher nur bei bestimmten Zuständen gestattet wird) zu entkoppeln.

Auf der Grundlage des erfindungsgemäßen Verfahrens kann eine große Anzahl von Fahrzeugen innerhalb kürzester Zeit gewarnt oder sogar umprogrammiert werden. Die Fahrzeuge müssen hierbei keine Werkstatt aufsuchen. Die Durchführung einer Umprogrammierung ist möglich, ohne daß einem Fahrer hierdurch Unannehmlichkeiten oder Zeitverluste entstehen. Für einen Fahrzeughersteller besteht die Möglichkeit einer kompletten Übersicht, wie viele Fahrzeuge wann umprogrammiert worden sind.

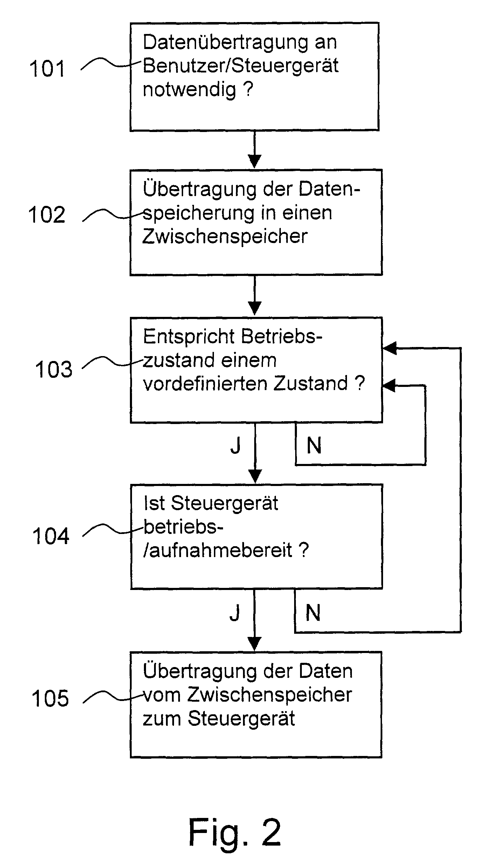

Das erfindungsgemäße Verfahren wird nun noch einmal anhand des in Figur 2 dargestellten Flußdiagramms eines bevorzugten Ausführungsbeispiels beschrieben. In einem Schritt 101 wird zunächst anbieterseitig festgestellt, daß eine Datenübertragung an einen Benutzer notwendig geworden ist. In diesem Fall erfolgt, wie bereits ausführlich erläutert, eine Datenübertragung von der Sendestation 1 an die Kommunikationseinrichtung KE des Fahrzeugs 2. Von dort werden sie über den Datenbus DB 1 an den zentralen Fahrzeugrechner ZFR weitergeleitet. In einem Schritt 102 erfolgt eine Zwischenspeicherung der Daten in dem zentralen Fahrzeugrechner. Der Fahrzeugrechner prüft nun in regelmäßigen Abständen, ob der Betriebszustand des Kraftfahrzeugs 2 einem vordefinierten Betriebszustand entspricht (Schritt 103). Ist dies der Fall, wird in einem Schritt 104 festgestellt, ob ein umzuprogrammierendes Steuergerät SG aufnahmebereit ist. Ist dies der Fall, erfolgt die gewünschte bzw. notwendige Datenübertragung in einem Schritt 105. Die Möglichkeiten einer Quittierung der Datenübertragung und einer Rückmeldung an die zentrale Sendestation wurden bereits erläutert und bedürfen daher an dieser Stelle keiner Wiederholung.

Wird in dem Schritt 104 jedoch festgestellt, daß das Steuergerät noch nicht aufnahmebereit ist, erfolgt eine Verzweigung zurück zu Schritt 103, wo wiederum festgestellt wird, ob der Betriebszustand des Kraftfahrzeugs noch dem vordefinierten Betriebszustand entspricht.

## Patentansprüche

1. Verfahren zur Übertragung von Daten, insbesondere von Programmen oder Software, zwischen einem anbieterseitigen Datenverarbeitungsgerät, insbesondere einem Server, und wenigstens einem benutzerseitigen Datenverarbeitungsgerät, insbesondere einem programmierbaren Steuergerät in einem Kraftfahrzeug, wobei das anbieterseitige Datenverarbeitungsgerät und das benutzerseitige Datenverarbeitungsgerät jeweils mit einer Sende/Empfangseinrichtung zum drahtlosen Senden bzw. Empfangen der Daten in Wirkverbindung stehen,
**dadurch gekennzeichnet,**
**daß** die Daten nach Übertragung von einer der Sende/Empfangseinrichtungen auf die jeweils andere Sende/Empfangseinrichtung zunächst auf einen Zwischenspeicher gegeben bzw. zwischengespeichert werden und erst bei Vorliegen eines vordefinierten benutzerseitigen oder anbieterseitigen Betriebszustandes in das jeweilige Datenverarbeitungsgerät eingelesen bzw. geladen werden.

2. Verfahren nach Anspruch 1, **dadurch gekennzeichnet, daß** ein Betriebszustand des Kraftfahrzeugs als vordefinierbarer benutzerseitiger Betriebszustand gewählt wird.

3. Verfahren nach Anspruch 2, **dadurch gekennzeichnet, daß** als vordefinierter Betriebszustand der Zustand mit stehendem Fahrzeug und/oder eingestellter Feststellbremse und/oder ausgeschalteter Zündung und/oder ausgeschaltetem Fahrtschalter, insbesondere bei Dieselfahrzeugen, und/oder abgezogenem Zündschlüssel gewählt wird.

4. Verfahren nach Anspruch 3, **dadurch gekennzeichnet, daß** eine Stromversorgung des benutzerseitigen Datenverarbeitungsgeräts und/oder des Zwischenspeichers für eine voreinstellbare Zeit nach Ausschalten der Zündung bzw. Abziehen des Zündschlüssels des Kraftfahrzeugs aufrechterhalten wird.

5. Verfahren nach einem der vorstehenden Ansprüche, **dadurch gekennzeichnet, daß** der Zwischenspeicher mit einem zentralen Fahrzeugrechner in Wirkverbindung steht bzw. als Teil dieses zentralen Fahrzeugrechners ausgebildet ist.

6. Verfahren nach Anspruch 5, **dadurch gekennzeichnet, daß** die übertragenen Daten von dem zentralen Fahrzeugrechner geprüft, registriert und zwischengespeichert werden.

7. Verfahren nach einem der Ansprüche 5 oder 6, **dadurch gekennzeichnet, daß** der zentrale Fahrzeugrechner über einen bidirektionalen Datenbus mit wenigstens einem benutzerseitigen Datenverarbeitungsgerät verbunden ist.

8. Verfahren nach einem der vorstehenden Ansprüche, **dadurch gekennzeichnet, daß** die benutzerseitigen Datenverarbeitungsgeräte eine Motorsteuerung, ein ABS-System, ein EBS-System, ein Fahrdynamikregelungssystem, eine Luftfederung, eine Getriebesteuerung und/oder eine Retardsteuerung umfassen.

9. System zur Übertragung von Daten, insbesondere Programmen oder Software, zwischen einem anbieterseitigen Datenverarbeitungsgerät, insbesondere einem Server, und wenigstens einem benutzerseitigen Datenverarbeitungsgerät (SG1, SG2 ...), insbesondere einem programmierbaren Steuergerät in einem Kraftfahrzeug, wobei das anbieterseitige Datenverarbeitungsgerät und das benutzerseitige Datenverarbeitungsgerät jeweils mit einer Sende-/Empfangseinrichtung (ZKE, KE) zum drahtlosen Senden bzw. Empfangen der Daten in Wirkverbindung stehen,
**gekennzeichnet durch**
Mittel (ZFR) zum Zwischenspeichern der übertragenen Daten nach ihrer Übertragung von einer der Sende/Empfangseinrichtungen (ZKE) auf die jeweils andere Sende/Empfangseinrichtung (KE), und zum Übertragen der zwischengespeicherten Daten auf das jeweilige Datenverarbeitungsgerät erst bei Vorliegen eines vordefinierten benutzerseitigen oder anbieterseitigen Betriebszustandes.

10. System nach Anspruch 9, **gekennzeichnet durch** Mittel zur Aufrechterhaltung einer Stromversorgung des benutzerseitigen Datenverarbeitungsgeräts und/oder der Mittel (ZFR) zur Zwischenspeicherung für eine voreinstellbare Zeit nach Ausschalten der Zündung bzw. Abziehen des Zündschlüssels des Kraftfahrzeugs.

11. System nach einem der Ansprüche 9 oder 10, **dadurch gekennzeichnet, daß** die Mittel zur Zwischenspeicherung mit einem zentralen Fahrzeugrechner (ZFR) in Wirkverbindung stehen bzw. als Teil dieses zentralen Fahrzeugrechners ausgebildet sind.

12. System nach einem der Ansprüche 9 bis 11, **gekennzeichnet durch** einen bidirektionalen Datenbus (DB2), über den der zentrale Fahrzeugrechner (ZFR) mit wenigstens einem benutzerseitigen Datenverarbeitungsgerät (SG1, SG2 ...) verbunden ist.

13. System nach einem der Ansprüche 9 bis 12, **dadurch gekennzeichnet, daß** die benutzerseitigen Datenverarbeitungsgeräte (SG1, SG2 ...) eine Motorsteuerung, ein ABS-System, ein EBS-System, ein Fahrdynamikregelungssystem, eine Luftfederung, eine Getriebesteuerung und/oder eine Retardsteuerung umfassen.
